# EUROPÄISCHE PATENTANMELDUNG

(11) **EP 1 032 103 A1**
(43) Veröffentlichungstag der Anmeldung: **30.08.2000**
(21) Anmeldenummer: 99126115.7
(22) Anmeldetag: 29.12.1999
(51) Int. Cl.: H02G 3/04

(54) **Installationskanal**

(30) Priorität: 21.01.1999 DE 29900979 U
(71) Anmelder: REHAU AG + Co, 95111 Rehau (DE)
(72) Erfinder: Kadrnoska, Helmut, 1030 Wien (AT); Schöbel, Michael, 95100 Selb (DE); Meinel, Udo, 95111 Rehau (DE); Reiss, Gerhard, 1030 Wien (AT); Ogns, Bernhard, 2353 Guntramsdorf (AT)

(57) **Zusammenfassung**

Die Erfindung betrifft einen Installationskanal für Versorgungsleitungen wie Rohre und Kabel, mit einem die Versorgungsleitungen aufnehmenden kanalförmigen Unterteil und einem den Kanalinnenraum nach außen abschließenden Oberteil, wobei das Oberteil an dem kanalförmigen Unterteil befestigbar ist, und wobei die Seitenfläche des kanlaförmigen Unterteils parallel zur Befestigungsfläche verläuft.

Die Erfindung hat sich zur Aufgabe gestellt, einen Installationskanal anzugeben, der die Nachteile des bekannten Standes der Technik nicht aufweist, der kostengünstig herstellbar und montierbar ist und der den Nagetieren keinerlei Weg- und Angriffsmöglichkeiten bietet.

Erfindungsgemäß wird dazu vorgeschlagen, daß die Seitenfläche des kanalförmigen Unterteiles mit der Seitenfläche des nach außen abschließenden Oberteiles einen spitzen Winkel bildet.

## Beschreibung

Die Erfindung bezieht sich auf einen Installationskanal für Versorgungsleitungen wie Rohre und Kabel, mit einem die Versorgungsleitungen aufnehmenden kanalförmigen Unterteil und einem den Kanalinnenraum nach außen abschließenden Oberteil, wobei das Oberteil an dem kanalförmigen Unterteil befestigbar ist, und wobei die Seitenfläche des kanalförmigen Unterteils parallel zur Befestigungsfläche verläuft.

Installationskanäle dieser Art gelangen vor allem in der Elektroinstallationstechnik zur Verlegung von Leitungen und Kabeln zum Einsatz. Ein solcher Installationskanal enthält im allgemeinen ein Kanalteil sowie einen auf diesem befestigbaren und bei Bedarf abnehmbaren Deckel. Das Kanalteil weist einen nach oben offenen Querschnitt auf, wobei zwei Seitenwände vorhanden sind. Die Seitenwände und der Deckel sind mit einander zugeordneten und ineinandergreifenden Befestigungselementen zur Befestigung des Deckels versehen. Das Kanalteil kann in geeigneter Weise, beispielsweise mit Schrauben, mit einer Wand oder dergleichen, verbunden sein.

Aus der EP 0 271 891 ist ein solcher gattungsgemäßer Installationskanal bekannt. Dieser Installationskanal, der ohne Rückwand gefertigt und mittels Verschlußklammern zusammengehalten wird, soll kostengünstig herstellbar, leicht zu montieren und ein bequemes Ein- bzw. Auslegen der Kabel ermöglichen. Darüber hinaus soll dieser Installationskanal bei seiner Lagerung und seinem Transport möglichst wenig Raum durch Verwendung stapelfähiger Elemente beanspruchen.

Dieser beispielhafte Installationskanal sowie alle anderen gattungsgemäßen Installationskanäle weisen im allgemeinen einen viereckigen Querschnitt auf, der vorzugsweise sich rechteckfömig darstellt.

Bei der Verwendung dieser dem bekannten Stand der Technik zuzuordnenden Installationskanäle in Abwässerkanälen, in Katakomben, in Stallungen und dergleichen treten jedoch massive Probleme auf.

Diese an den Wänden befestigten Installationskanäle bieten einen idealen Weg für in diesen Anwendungsgebieten lebenden Tieren, hier insbesondere Nagetieren wie Mäusen, Ratten und dergleichen. Diese haben die Möglichkeit, auf der nach oben gerichteten Seite der Installationskanäle zu wandern und sich so problemlos innerhalb der Kanalsysteme zu bewegen und andererseits besteht auch die Möglichkeit, wie es die Praxis häufig beweist, daß diese Tiere sowohl die verbauten Installationskanäle selbst als auch die in sie hineingehenden oder von ihnen wegführenden Kabel annagen und somit zu erheblichen kurzfristigen elektrischen bzw. nachrichtentechnischen Störungen führen können. Aus diesen resultieren erhebliche Nachfolgeschäden und Aufwendungen wie Fehlersuche in den Kanalsystemen, Beseitigung der verursachten Störungen in teilweise räumlich sehr engen und mit Abwassern kontaminierten Kanälen und gegebenenfalls der Belastung durch die anwesenden Tiere.

Hier setzt die Erfindung ein, die es sich zur Aufgabe gestellt hat, einen Installationskanal anzugeben, der diese besagten Nachteile nicht aufweist, der kostengünstig herstellbar und montierbar ist und der den Nagetieren keinerlei Weg- und Angriffsmöglichkeiten bietet.

Diese Aufgabe wird durch die kennzeichnenden Merkmale des Anspruches 1 gelöst. Erfindungsgemäß wird dazu vorgeschlagen, daß die Seitenfläche des kanalförmigen Unterteiles mit der Seitenfläche des nach außen abschließenden Oberteiles einen spitzen Winkel bildet.
Dieser Winkel kann erfindungsgemäß Werte bis maximal 80° annehmen.
In einer weiteren vorteilhaften Ausgestaltung ist die Seitenfläche des nach außen abschließenden Oberteiles geradlinig ausgebildet, wobei jedoch hier auch geknickte, konkave oder konvexe Formen erfindungsgemäß möglich sind. Die Erfindung lehrt aber auch, daß die Seitenfläche des kanalförmigen Unterteils nicht nur geradlinig, sondern ebenfalls geknickt, konkav oder konvex ausgeführt sein kann. In einer weiteren vorteilhaften Ausgestaltung der Erfindung ist die Seitenfläche des kanalförmigen Unterteils und die Seitenfläche des nach außen abschließenden Oberteiles an wenigstens einem ihrer freien Enden einstückig miteinander verbunden. Durch diese vorteilhafte Form können die Herstellungskosten reduziert werden. Dies kann dadurch realisiert werden, daß die einstückige Verbindung ein Filmschamier und/oder eine zum Grundmaterial des Oberteils oder des Unterteils weicher eingestelltes Material ist.

Hierdurch kann die Montagezeit in den unterirdischen Kanalsystemen noch weiter reduziert werden, so daß die Verlegung des erfindungsgemäßen Installationskanales kostengünstig und montagefreundlich erfolgt. In weiteren vorteilhaften Ausführungsformen sind in dem die Versorgungsleitungen aufnehmenden kanalförmigen Unterteil Öffnungen eingebracht, die der Entwässerung des Installationskanalsystemes dienen.
Weiterhin offenbart die Erfindung, daß das kanalförmige Unterteil durch wenigstens eine in axialer Richtung verlaufende Zwischenwand unterteilt sein kann.

Die Erfindung ist nachstehend anhand der in den Abbildungen dargestellten Ausführungsbeispiele näher erläutert.

Es zeigt:
- Figur 1: Schnittdarstellung eines erfindungsgemäßen Installationskanales
- Figur 2: Schnittdarstellung eines weiteren erfindungsgemäßen Installationskanales

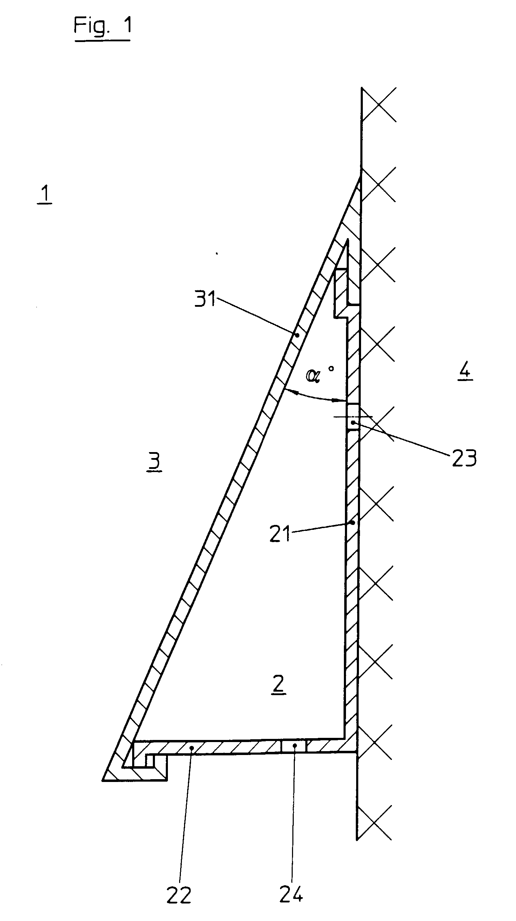

In Figur 1 ist der erfindungsgemäße Installationskanal 1 dargestellt, der parallel zur Befestigungsfläche 4 fixiert ist. Der Installationskanal 1 besteht aus dem die Versorgungsleitungen aufnehmenden kanalförmigen Unterteil 2 und das den Kanalinnenraum nach außen abschließende Oberteil 3. Die Seitenfläche 21 des kanalförmigen Unterteils 2 bildet mit der Seitenfläche 31 des nach außen abschließenden Oberteiles 3 einen spitzen Winkel α. Das die Versorgungsleitung aufnehmende kanalförmige Unterteil 2 ist über die in der Seitenfläche 21 befindlichen Öffnungen 23 an der Befestigungsfläche 4 fixiert. Das kanalförmige Unterteil 2 hat eine annähernd L-förmige Form und besteht aus der Seitenfläche 21 und der Basisfläche 22. In der Basisfläche 22 sind in dieser Ausführungsform Entwässerungsöffnungen 24 eingebracht. Die Seitenfläche 31 des nach außen abschließenden Oberteiles 3 ist in dieser vorteilhaften Ausführungsform geradlinig ausgeführt.

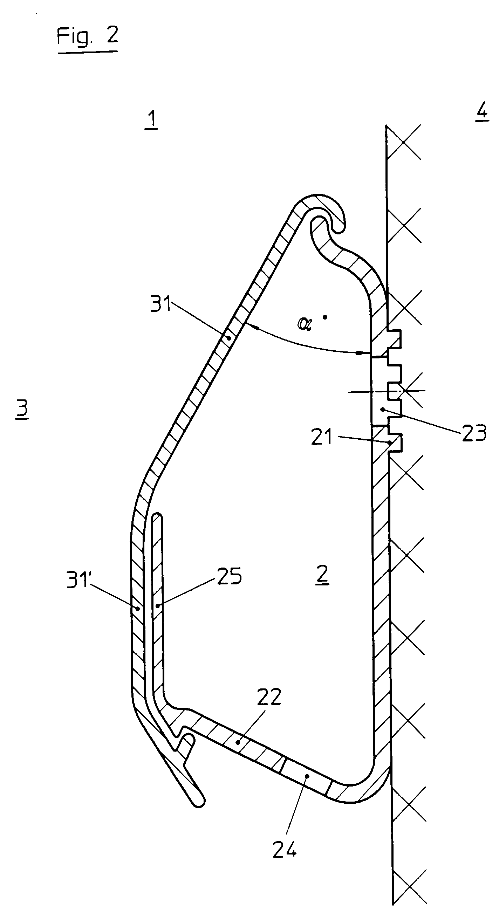

Figur 2 zeigt eine weitere vorteilhafte Ausführungsform des erfindungsgemäßen Installationskanales 1. Dieser besteht aus dem die Versorgungsleitungen aufnehmenden kanalförmigen Unterteil 2 und einem den Kanalinnenraum nach außen abschließenden Oberteil 3.

Das kanalförmige Unterteil 2 ist über die Öffnung 23 in der Seitenfläche 21 mit der Befestigungsfläche 4 fest verbunden. Die Seitenfläche 21 des kanalförmigen Unterteils 2 bildet zusammen mit der Seitenfläche 31 des nach außen abschließenden Oberteils 3 einen spitzen Winkel α.

Das kanalförmige Unterteil 2 besteht aus der Seitenfläche 21 der Basisfläche 22 und der Fläche 25. In die Basisfläche 22 des kanalförmigen Unterteils 2 sind Entwässerungsöffnungen 24 eingebracht. Die Seitenfläche 31 des nach außen abschließenden Oberteils 3 ist in dieser vorteilhaften Ausführungsform geknickt ausgeführt und geht in die Fläche 31', welche annähernd parallel zur Fläche 25 des kanalförmigen Unterteils 2 verläuft, über.

## Patentansprüche

1. Installationskanal für Versorgungsleitungen wie Rohre und Kabel, mit einem die Versorgungsleitungen aufnehmenden kanalförmigen Unterteil und einem den Kanalinnenraum nach außen abschließenden Oberteil, wobei das Oberteil an dem kanalförmigen Unterteil befestigbar ist, und wobei die Seitenfläche des kanalförmigen Unterteils parallel zur Befestigungsfläche verläuft,
dadurch gekennzeichnet,
daß die Seitenfläche 21 des kanalförmigen Unterteils 2 mit der Seitenfläche 31 des nach außen abschließenden Oberteils 3 einen spitzen Winkel bildet.

2. Installationskanal nach Anspruch 1, dadurch gekennzeichnet, daß der Winkel zwischen der Seitenfläche 21 des kanalförmigen Unterteils 2 und der Seitenfläche 31 des nach außen abschließenden Oberteils 3 maximal 80° beträgt.

3. Installationskanal nach einem der vorhergehenden Ansprüche, dadurch gekennzeichnet, daß die Seitenfläche 31 des nach außen abschließenden Oberteils 3 geradlinig, geknickt, konkav oder konvex ausgebildet ist.

4. Installationskanal nach einem der vorhergehenden Ansprüche, dadurch gekennzeichnet, daß die Seitenfläche 21 des kanalförmigen Unterteils 2 und die Seitenfläche 31 des nach außen abschließenden Oberteils 3 an wenigstens einem ihrer freien Enden einstückig miteinander verbunden sind.

5. Installationskanal nach Anspruch 4, dadurch gekennzeichnet, daß die einstückige Verbindung ein Filmschamier, eine zum Grundmaterial des nach außen abschließenden Oberteils 3 oder des kanalförmigen Unterteils 2 weicher eingestelltes Material oder dergleichen ist.
